# EUROPÄISCHE PATENTSCHRIFT

(11) **EP 3 214 098 B1**
(45) Veröffentlichungstag und Bekanntmachung des Hinweises auf die Patenterteilung: **31.10.2018**
(21) Anmeldenummer: 17158952.6
(22) Anmeldetag: 02.03.2017
(51) Int. Cl.: C08B 11/193, C08B 11/145

(54) **MIT HYDROXYALKYL- UND OMEGA-ALKINYLGRUPPEN UND MIT HYDROXYALKYL-, OMEGA-ALKINYL- UND AZIDOGRUPPEN SUBSTITUIERTE CELLULOSEETHER UND DEREN VERWENDUNG ALS WASSERUNLÖSLICHE KLEBSTOFFE**
CELLULOSE ETHERS SUBSTITUTED WITH HYDROXYALKYL AND OMEGA-ALKINYL GROUPS AND CELLULOSE ETHERS SUBSTITUTED WITH HYDROXYALKYL, OMEGA-ALKINYL AND AZIDO GROUPS AND THEIR USE AS WATER-INSOLUBLE ADHESIVES
ÉTHER DE CELLULOSE SUBSTITUÉ PAR DES GROUPES HYDROXYALKYLE, ET OMÉGA ALKINYLE ET HYDROXYALKYLE, OMÉGA-ALKINYLE ET AZIDO ET SON UTILISATION EN TANT QU'ADHÉSIF INSOLUBLE DANS L'EAU

(30) Priorität: 03.03.2016 DE 102016103792
(43) Veröffentlichungstag der Anmeldung: 06.09.2017
(73) Patentinhaber: SE Tylose GmbH & Co.KG, 65203 Wiesbaden (DE)
(72) Erfinder: Kleinert, Mike, 65203 Wiesbaden (DE); Wischang, Diana, 65203 Wiesbaden (DE)
(74) Vertreter: Plate, Jürgen

(56) Entgegenhaltungen:
- EP-A1- 2 712 873
- WO-A1-2015/153217
- EISSA AHMED M ET AL: "A versatile method for functionalization and grafting of 2-hydroxyethyl cellulose (HEC)viaClick chemistry", CARBOHYDRATE POLYMERS, Bd. 90, Nr. 2, 18. Juni 2012 (2012-06-18), Seiten 859-869, XP028932003, ISSN: 0144-8617, DOI: 10.1016/J.CARBPOL.2012.06.012

## Beschreibung

Die Erfindung betrifft Celluloseethermit Hydroxyalkylgruppen und ω-Alkinylgruppen, die jeweils über eine Etherbindung mit der Cellulose verbunden sind, sowie Celluloseether mit Hydroxyalkylgruppen, Azidogruppen und ω-Alkinylgruppen, die jeweils über eine Etherbindung mit der Cellulose verbunden sind sind. In Gegenwart eines Katalysators vernetzen die so substituierten Celluloseether zu wasserunlöslichen Klebstoffen.

Die Celluloseether sind insbesondere nicht-ionische Celluloseether, basierend auf Hydroxyalkylcellulosen, wie Hydroxyethylcellulose (HEC) oder Hydroxypropylcellulose (HPC) mit einer Coveretherung durch Azidohydroxyalkylsubstituenten. Diese bifunktionalisierten "Azid"-Mischether können entweder
i) in Mischung mit analogen, bifunktionalisierten "Alkin"-Mischethern oder
ii) durch eine Drittfunktionalisierung in einen "Azid-Alkin"-Mischether überführt
in Klebstoffsystemen eingesetzt werden. Die Klebstoffe sind insbesondere zum Verkleben organischer Substrate wie Papier, Karton oder Holz geeignet.

Mit 3-Azido-2-hydroxyalkyl-Gruppen (AHP-Gruppen) modifizierte Cellulose ist in dem Artikel von L. Petrus et al., "Preparation of O-(3-azido-2-hydroxypropyl)cellulose and its photolysis to O-(2-formyl-2-hydroxyethyl)cellulose" in Chem. Papers 40 [1986] 519 - 522 beschrieben. Der Celluloseether enthält neben den AHP-Gruppen keine weiteren Gruppen. Mit einem besonders hohen Anteil an AHP-Gruppen substituierte Cellulose ist Gegenstand des Artikels von F.-F. Yang et al., "A Novel Cellulose-Based Azide Energetic Material: 1-Azido-2-hydroxypropyl Cellulose Ether" in Journal of Energetic Materials 29 [2011] 241 - 260. Der Stickstoffanteil in dem Celluloseether liegt bei mehr als 10 Gew.-%. Der Celluloseether ist als Sprengstoff vorgesehen.

In dem Artikel von N. Pahimanolis et al., "Surface functionalization of nanofibrillated cellulose using click-chemistry approach in aqueous media" in Cellulose 18 [2011] 1201 - 1212 ist die Umsetzung von nanofibrillärer Cellulose mit 1-Azido-2-epoxypropan beschrieben. Die dabei erhaltene 3-Azido-2-hydroxypropyl-Cellulose wird dann mit einem Alkin, beispielsweise Propargylamin, in einer kupfer(I)-katalysierten "Click"-Reaktion umgesetzt. Dabei entstehen [1,2,3]-Triazole.

Nicht-ionische Celluloseether, die AHP-Gruppen und Hydroxyalkylgruppen aufweisen, sowie Verfahren zu deren Herstellung sind in der EP 2 712 873 A1 offenbart. Die so modifizierten Celluloseether sind wasserlöslich. Durch den Einbau der AHP-Gruppen lassen sich die rheologischen Eigenschaften der Celluloseether in weiten Bereichen modifizieren, indem die Azidtermini mit Alkinen zur Reaktion gebracht werden.

Gegenstand der DE 10 2009 022 805 A1 ist ein Verfahren zur Herstellung von Polysaccharidestern und -mischestern. Das ggf. modifizierte Polysaccharid wird mit einem Veresterungsreagenz und einer Halogenid-Komponente umgesetzt. Die Veresterung erfolgt in Gegenwart eines in-situ generierten Imidazolium-Salzes. Das Imidazolium-Salz wird beispielsweise aus 1-Methyl-, 1-Vinyl- oder 1-Acetyl-imidazol erhalten. In Gegenwart des Imidazoliumsalzes ist die Veresterungsreaktion schneller und bei niedrigerer Temperatur durchführbar. Das Polysaccharid ist bevorzugt Cellulose.

In der DE 37 23 897 A1 sind Cellulosederivate und daraus hergestellte Fasern und Membranen offenbart. Hergestellt werden die Cellulosederivate, indem Cellulose in einer Mischung von N,N-Dimethyl-acetamid und/oder N-Methyl-pyrrolidon und Lithiumchlorid homogen gelöst und mit Anhydriden, Isocyanaten oder Säurechloriden umgesetzt wird. Auf diese Weise lassen sich auch Celluloseester und -ether mit Alkinylgruppen erhalten.

In der CN 102 617 740 A ist ein Verfahren von Celluloseethern mit Propargylgruppen beschrieben. Hergestellt wird der Celluloseether aus Cellulose, die in einer Mischung von N,N-Dimethyl-acetamid oder N,N-Dimethyl-formamid und Lithiumchlorid gelöst und anschließend mit einem Propargylhalogenid umgesetzt wird.

In dem Artikel von P.-A. Faugeras et al, "Crosslinked cellulose developed by CuAAC, a route to new materials" in Carbohydrate Research 356 [2012] 247 - 251, ist die Herstellung von vernetzten Celluloseethern beschrieben. Hergestellt werden sie durch Umsetzung von Propargylcellulose mit Azidodeoxycellulose. Die Propargylgruppen reagieren dabei mit den Azidogruppen in einer 1,3-dipolaren Cycloadditionsreaktion. Dabei bilden sich Triazole.

Celluloseether lassen sich bekanntermaßen auch als Klebstoffe (z. B. Tapetenkleister) verwenden. Unter der Einwirkung von Wasser oder Feuchtigkeit lässt die Klebewirkung jedoch stark nach, weil die Celluloseether mehr oder weniger stark aufgelöst werden.

Wasserlösliche Celluloseether mit 3-Azido-2-hydroxypropyl-Gruppen können feuchtigkeitsstabile Klebeverbindungen ergeben, wenn sie mit Alkinen und Kupfer- und/oder Ruthenium-Katalysatoren gemischt werden. Dabei reagieren die Azid-Gruppen mit den Alkin-Gruppen in einer Cycloadditionsreaktion zu [1,2,3]-Triazol-Gruppen. Dadurch kann ein fester Klebstoff erhalten werden, der seine Eigenschaften auch in feuchter Umgebung behält, wie in der DE 10 2015 115 804.3 offenbart. Für die dort beschriebenen, schaltbaren Eigenschaftsänderungen sind bisher prinzipiell drei Komponenten nötig:
1. ein azid-funktionalisierter Celluloseether,
2. eine geeignete Alkinkomponente sowie
3. ein Katalysator, vorzugsweise in gelöster Form.
Für die jeweils beabsichtigte Wirkung, beispielweise die Viskositätsänderung einer Lösung oder die Löslichkeitsänderung (viskoses Fluid → strukturelastischer Feststoff) müssen alle drei Komponenten in bestimmtem zeitlichen Abstand zusammengebracht und vermischt werden, was im konkreten Anwendungsfall schwierig sein kann und einen erheblichen technischen Aufwand bedeutet.

Es bestand also die Aufgabe, diese Dreierkombination zu vereinfachen, so dass sie sich leichter anwenden lässt.

Gefunden wurde nunmehr überraschend, dass sich bei bestimmten, moderaten Bedingungen Cellulose co-verethern lässt mit (i) einem Alkylenoxid, wie Ethylenoxid oder Propylenoxid, (ii) Glycidylazid und (iii) einem Alkinhalogenid, wie Propargylbromid.

Die unerwünschte, verfrühte thermische Triazolbildung (s. R. Huisgen, "1.3-Dipolare Cycloadditionen Rückschau und Ausblick", Angew. Chem. 75 [1963] 604-637) unterbleibt dann, so dass sich ein Zugang zu ternär funktionalisierten Celluloseethern ergibt, beispielsweise zu Azido-Alkin-Hydroxyethylcelluloseether, "Azoin-HEC". Diese (Komponente 1) sind wasserlöslich und sie können eine viskositätsgesteigerte wässrige Lösung erzeugen, deren rheologische Eigenschaften durch Zugabe eines geeigneten Katalysators (Komponente 2) erfindungsgemäß stark modifiziert werden können.

Eine alternative Darstellung eines solchen Zwei-Komponenten-Systems ist für den konkreten Anwendungsfall der Verklebung realisierbar, indem zwei verschiedene, orthogonal funktionalisierte Celluloseether als Feststoff vermischt werden. Für die Endanwendung ist diese homogene, pulverförmige Mischung zweier Ingredienzien (Komponente 1) vorteilhaft, weil diese Produkte ebenfalls eine viskositätsgesteigerte wässrige Lösung erzeugen können, deren rheologische Eigenschaften durch Zugabe eines geeigneten Katalysators (Komponente 2) erfindungsgemäß stark modifiziert werden können.

Gegenstand der Erfindung sind somit nichtionische, wasserlösliche Celluloseether mit Hydroxyalkylgruppen und ω-Alkinylgruppen, die jeweils über eine Etherbindung mit der Cellulose verbunden sind, wobei der molare Substitutionsgrad MS(Alkin) im Bereich von 0,001 bis 0,30 liegt. In einer bevorzugten Ausführungsform enthält der Celluloseether zusätzlich Azidogruppen, besonders bevorzugt 3-Azido-2-hydroxypropyl(AHP)-Gruppen, die ebenfalls über eine Etherbindung mit der Cellulose verbunden sind, wobei der molare Substitutionsgrad MS(AHP) im Bereich von 0,001 bis 0,30 liegt.

Die erfindungsgemäßen, nicht-ionischen Celluloseether können darüber hinaus noch weitere Gruppen aufweisen, die über eine Etherbindung mit dem Cellulose-Grundgerüst verbunden sind. Das sind vorzugsweise (C1 - C6)Alkylgruppen, besonders bevorzugt Methyl-, Ethyl-, Propyl-, Isopropyl-, Butyl-, Isobutyl-, sec-Butyl-, Pentyl- oder Hexylgruppen.

Die Hydroxyalkylgruppen sind vorzugsweise 2-Hydroxyethyl- oder 2-Hydroxypropyl-Gruppen. Sie entstehen bei der Umsetzung der Cellulose bzw. des Celluloseethers mit Ethylenoxid oder Propylenoxid. Die Alkinylgruppen weisen vorzugsweise 3 bis 6 Kohlenstoffatome auf; besonders bevorzugt sind Propargylgruppen (= 3-Propinyl-Gruppen).

Wasserunlösliche, feste Klebeverbindungen werden erhalten, wenn die wasserlöslichen ternären Azoin-Celluloseether unter Kupfer- und/oder Ruthenium-Katalyse miteinander reagieren und entsprechend vernetzen. Ein vergleichbares Verhalten kann in wässrigen Lösungen vorgemischter Produkte Azidohydroxyalkylcelluloseether und Alkin-hydroxyalkyl-celluloseether unter Einwirkung von Kupfer- und/oder Ruthenium-Verbindungen erzielt werden.

Bevorzugte Ausgangsmaterialien sind dementsprechend wasserlösliche, nichtionische Celluloseether, wie Hydroxyethylcellulose (HEC), Hydroxypropylcellulose (HPC), Methylhydroxyethylcellulose oder Methylhydroxypropylcellulose. Bei Methylhydroxyethylcellulosen und Methylhydroxypropylcellulosen beträgt der Substitutionsgrad DS(Me) allgemein 1,0 bis 2,5, bevorzugt 1,2 bis 2,5, besonders bevorzugt 1,4 bis 1,9, der Substitutionsgrad MS(HE bzw.HP) allgemein 0,01 bis 1,0, bevorzugt 0,05 bis 0,8, besonders bevorzugt 0,05 bis 0,6. Bei Hydroxyethylcellulosen und Hydroxypropyl-cellulosen beträgt der Substitutionsgrad MS(HE bzw.HP) allgemein 1,0 bis 4,0, bevorzugt 1,5 bis 3,3. Die erfindungsgemäßen nicht-ionischen Celluloseether werden vorzugsweise aus Holzzellstoff, beispielsweise Fichtenzellstoff oder Eukalyptus-Zellstoff, hergestellt. Die Cellulose hat darin üblicherweise einen durchschnittlichen Polymersationsgrad DPn von 500 bis 2500, bevorzugt von 700 bis 1500.

"Wasserlöslich" bedeutet im Zusammenhang mit der vorliegenden Erfindung, dass der unmodifizierte Celluloseether zu mehr als 1,0 % (w/w), bevorzugt zu mehr als 10 % (w/w), besonders bevorzugt zu mehr als 20 % (w/w), in kaltem Wasser (20 °C) löslich ist.

Die Celluloseether mit AHP-Gruppen sind erhältlich durch Umsetzung des entsprechenden Celluloseethers mit Glycidylazid, wie beispielsweise in der EP 2 712 873 A1 beschrieben.

Die 3-Azido-2-hydroxypropyl-Gruppen können dabei über die Hydroxylgruppen der Ethylenglykol- bzw. Propylenglykol-Seitenketten oder direkt über die Hydroxylgruppen der Anhydroglucose-Einheiten an die Celluloseether gebunden sein. Der durchschnittliche Substitutionsgrad der Cellulose mit den 3-Azido-2-hydroxypropyl-Gruppen (MS(AHP)) liegt allgemein im Bereich von 0,001 bis 0,30 pro Anhydroglucose-Einheit, bevorzugt liegt der MS im Bereich von 0,05 bis 0,25. Die mit Azidogruppen substituierten Celluloseether haben zweckmäßig einen durchschnittlichen Polymersationsgrad DPn von 50 bis 4000, bevorzugt von 1000 bis 2500, besonders bevorzugt von 700 bis 1500.

Celluloseether mit 3-Azido-2-hydroxypropyl-Gruppen lassen sich auch erhalten, wenn alkalisierte Cellulose unmittelbar nacheinander oder gleichzeitig mit einem Alkylenoxid und Glycidylazid in ein und demselben Reaktor in Form einer klassischen Co-Veretherung umgesetzt wird.

Celluloseether mit terminalen Alkin-Gruppen sind beispielsweise erhältlich durch Umsetzung des entsprechenden Celluloseethers mit Alkinylhalogeniden gemäß der klassischen Ethersynthese nach Williamson, beispielsweise mit Propargylbromid. Die Alkinyl-Gruppen können dabei über die Hydroxylgruppen der Ethylenglykol- bzw.

Propylenglykol-Seitenketten oder direkt über die Hydroxylgruppen der Anhydroglucose-Einheiten an die Cellulose gebunden sein. Der durchschnittliche Substitutionsgrad der Cellulose mit den Alkinyl-Gruppen (MS(Alkin)) liegt allgemein im Bereich von 0,001 bis 0,30 pro Anhydroglucose-Einheit, bevorzugt liegt der MS im Bereich von 0,05 bis 0,25. Die mit Alkingruppen substituierten Celluloseether haben zweckmäßig einen durchschnittlichen Polymersationsgrad DPn von 500 bis 4000, bevorzugt von 600 bis 2500, besonders bevorzugt von 700 bis 1500.

Bei der thermisch induzierten Huisgen-Cycloaddition entstehen Gemische von Regioisomeren. Die 1,3-dipolare Cycloaddition von Aziden an Alkine (Huisgen-Reaktion) erfolgt daher zweckmäßig mit Hilfe von Cu(I)-Katalysatoren. Dabei entstehen regioselektiv 1,4-disubstituierte [1,2,3]-Triazole. Geeignet ist beispielsweise Cu(I)-bromid, Cu(I)-iodid oder Cu(I)-acetat. Katalytisch aktive Cu(I)-Salze lassen sich auch in situ herstellen, beispielsweise aus Kupfer(II)-sulfat durch Reduktion mit Ascorbinsäure in wässriger Lösung. Die metallkatalysierten Reaktionen laufen in der Regel bereits bei Raumtemperatur ab. Die Umwandlung der flüssigen bzw. fließfähigen Ausgangsmaterialien in einen festen Klebstoff erfolgt auch bei Raumtemperatur innerhalb von wenigen Sekunden, allgemein in weniger als 60 Sekunden, bevorzugt in weniger als 10 Sekunden.

Die Azid-Alkin-Cycloaddition kann auch von Ruthenium-Verbindungen katalysiert werden, beispielsweise von Bis(triphenylphosphin)-cyclopentadienyl-ruthenium-chlorid. Dabei werden allerdings, im Unterschied zu der kupferkatalysierten Reaktion, regioselektiv 1,5-disubstituierte [1,2,3]-Triazole erhalten.

Die nachfolgenden Beispiele dienen zur Illustration der Erfindung. Prozente stehen darin für Gewichtsprozente soweit nicht anders angegeben oder aus dem Zusammenhang unmittelbar ersichtlich. DS- und MS-Werte wurden nach der Zeisel-Methode bestimmt.

### Beispiel 1: "Alkin-HEC": Herstellung von Propargylhydroxyethylcellulose aus Zellstoff durch Co-Veretherung

In einem 2-Liter-Glasautoklaven, ausgerüstet mit einem Ankerrührer, wurden 83,6 g Fichtenzellstoff mit einem durchschnittlichen Polymerisationsgrad DPn von 850 (0,50 mol, 97 % Trockenanteil) in 531 g Isopropanol suspendiert. Der Reaktor wurde mit Stickstoff inertisiert, eine Lösung aus 22,0 g NaOH (0,55 mol) in 131 g Wasser zugefügt, erneut inertisiert und die Mischung für 35 min bei 25 °C gerührt. Dann wurden 86,1 ml Ethylenoxid (74,9 g, 1.70 mol) hinzugefügt, die Temperatur über einen Zeitraum von 30 min auf 45 °C erhöht und die Mischung 60 min bei dieser Temperatur gehalten. Anschließend wurden 29,7 g 80 %ige Lösung von Propargylbromid in Toluol (0,20 mol) zugesetzt, die Mischung innerhalb von 60 min auf 85 °C aufgeheizt und 90 min bei dieser Temperatur gehalten. Nach Abkühlen auf 30 °C wurde mit 34,6 g 31 %iger HCI-Lösung (0,295 mol) und 3,20 g Essigsäure (0,055 mol) gegen Phenolphtalein neutralisiert. Das Produkt wurde abfiltriert, zweimal mit 85 %igem wässrigen Isopropanol und Aceton gewaschen, bis der Salzgehalt des Produkts weniger als 0,5 % betrug (bestimmt durch Leitfähigkeitsmessung). Das Produkt wurde über Nacht bei 70 °C getrocknet.

### Beispiel 2: "Azoin-HEC": Herstellung von Azidohydroxypropylpropargylhydroxyethylcellulose aus Zellstoff durch Co-Veretherung

In einem 2-Liter-Glasautoklaven, ausgerüstet mit einem Ankerrührer, wurden 83,6 g Fichtenzellstoff mit einem durchschnittlichen Polymerisationsgrad DPn von 850 (0,50 mol, 97 % Trockenanteil) in 531 g Isopropanol suspendiert. Der Reaktor wurde mit Stickstoff inertisiert, eine Lösung aus 22,0 g NaOH (0,55 mol) in 131 g Wasser zugefügt, erneut inertisiert und die Mischung für 35 min bei 25 °C gerührt. Dann wurden 86,1 ml Ethylenoxid (74,9 g, 1.70 mol) hinzugefügt, die Temperatur über einen Zeitraum von 30 min auf 45 °C erhöht und die Mischung 60 min bei dieser Temperatur gehalten. Anschließend wurden 29,7 g 80 %ige Lösung von Propargylbromid in Toluol (0,20 mol) und 1 g einer 57,5 %igen Lösung von Glycidylazid in Ether (0,20 mol) (Herstellung siehe DE 10 2012 019 134 A1) zugesetzt, die Mischung innerhalb von 60 min auf 70 °C aufgeheizt und 225 min bei dieser Temperatur gehalten. Nach Abkühlen auf 30 °C wurde mit 34,6 g 31 %iger HCI-Lösung (0,295 mol) und 3,20 g Essigsäure (0,055 mol) gegen Phenolphtalein neutralisiert.
Das Produkt wurde abfiltriert, zweimal mit 85 %igem wässrigen Isopropanol und Aceton gewaschen, bis der Salzgehalt des Produkts weniger als 0,5 % betrug (bestimmt durch Leitfähigkeitsmessung).
Das Produkt wurde über Nacht bei 70 °C getrocknet.

### Beispiel 3: "Click AHP-HEC + Alkin-HEC": Kupfer-katalysierte Kupplung von einer Mischung Propargylhydroxyethylcellulose / Azidohydroxpropylhydroxyethylcellulose (AHP-HEC) mit CuS04 · 5 H2O zur Verklebung von Holz

10,0 g einer 1:1-Mischung Propargyl-HEC/AHP-HEC [5 % WG, MS(EO) 1,9, DS(Propargyl) 0,20, MS(GA) 0,20] wurden in 1000 ml kaltes Trinkwasser eingerührt und durch Rühren bei Raumtemperatur gelöst. Die klare Lösung wies eine Viskosität von ca. 250 mPas (Brookfield, LV) auf. Ein Teil der Lösung (ca. 50 ml) wurde auf zwei glatte, trockene Fichtenholzoberflächen mit einem Pinsel aufgetragen. Nachdem ca. 5 min auf ein partielles Einziehen der Lösung in die Holzporen gewartet wurde, wurde eine der beiden Holzoberflächen mit einer Lösung bestehend aus 10,0 g Kupfersulfat-Pentahydrat und 18,0 g Ascorbinsäure in 60 ml entgastem, entmineralisiertem Wasser mit einer handelsüblichen Sprühflasche besprüht und sofort die andere, ebenfalls beleimte Holzfläche durch leichte Reibebewegung angedrückt und fixiert, wie es technisch auch beim klassischen Verleimen von Holz geschieht. Am nächsten Tag war die Verklebung getrocknet und die Holzstücke konnten nicht gegeneinander bewegt oder voneinander entfernt werden. Das Eintauchen der verklebten Holzplatten in Wasser über einen Zeitraum von 18 h hat die Verklebung nicht merklich beeinträchtigt und die Verbindung konnte unter erheblicher Krafteinwirkung zwar gebrochen werden, jedoch wurden hierbei Fasern aus dem jeweils anderen Werkstück herausgerissen.

### Beispiel 4: "Click Azoin-HEC": Kupfer-katalysierte Kupplung von Azidohydroxypropylpropargylhydroxyethylcellulose (AHP-Propargyl-HEC) mit CuSO₄ Pentahydrat zur Verklebung von Holz

10,0 g einer AHP-Propargyl-HEC [5 % WG, MS(EO) 1,9, DS(Propargyl) 0,20, MS(GA) 0,20, DPn 850] wurden in 1000 ml kaltes Trinkwasser eingerührt und durch Rühren bei Raumtemperatur gelöst. Die klare Lösung wies eine Viskosität von ca. 250 mPas (Brookfield, LV) auf. Ein Teil der Lösung (ca. 50 ml) wurde auf zwei glatte, trockene Fichtenholzoberflächen mit einem Pinsel aufgetragen. Nachdem ca. 5 min auf ein partielles Einziehen der Lösung in die Holzporen gewartet wurde, wurde eine der beiden Holzoberflächen mit einer Lösung bestehend aus 10,0 g Kupfersulfat-Pentahydrat und 18,0 g Ascorbinsäure in 60 ml entgastem, entmineralisiertem Wasser mit einer handelsüblichen Sprühflasche besprüht und sofort die andere, ebenfalls beleimte Holzfläche durch leichte Reibbewegung angedrückt und fixiert, wie es technisch auch beim klassischen Verleimen von Holz geschieht. Am nächsten Tag war die Verklebung getrocknet und die Holzstücke konnten nicht gegeneinander bewegt oder voneinander entfernt werden. Das Eintauchen der verklebten Holzplatten in Wasser über einen Zeitraum von 18 h hat die Verklebung nicht merklich beeinträchtigt. Die Verbindung konnte unter erheblicher Krafteinwirkung zwar gebrochen werden, jedoch wurden hierbei Fasern aus dem jeweils anderen Werkstück herausgerissen.

## Patentansprüche

1. Nicht-ionische, wasserlösliche Celluloseether mit Hydroxyalkylgruppen und ω-Alkinyl-Gruppen, die jeweils über eine Etherbindung mit der Cellulose verbunden sind, wobei der molare Substitutionsgrad MS(Alkin) im Bereich von 0,001 bis 0,30 liegen.

2. Celluloseether gemäß Anspruch 1, **dadurch gekennzeichnet, dass** sie zusätzlich Azido-Gruppen, vorzugsweise 3-Azido-2-hydroxypropyl-Gruppen, aufweisen, die über eine Etherbindung mit der Cellulose verbunden sind, wobei der MS(AHP) im Bereich von 0,001 bis 0,3 liegt.

3. Celluloseether gemäß Anspruch 1 oder 2, **dadurch gekennzeichnet, dass** sie zusätzlich Alkyl-Gruppen aufweisen, die über eine Etherbindung mit der Cellulose verbunden sind, wobei die Alkylgruppen bevorzugt geradkettige (C1 - C6)Alkylgruppen sind, besonders bevorzugt Methyl- oder Ethylgruppen.

4. Celluloseether gemäß einem oder mehreren der Ansprüche 1 bis 3, **dadurch gekennzeichnet, dass** die ω-Alkinylgruppen 3 bis 6 Kohlenstoffatome aufweisen, wobei Propargylgruppen besonders bevorzugt sind.

5. Celluloseether gemäß einem oder mehreren der Ansprüche 1 bis 4, **dadurch gekennzeichnet, dass** die Hydroxyalkylgruppen 2-Hydroxyethyl- oder 2-Hydroxypropyl-Gruppen sind.

6. Celluloseether gemäß einem oder mehreren der Ansprüche 2 bis 5, **dadurch gekennzeichnet, dass** der MS(AHP) im Bereich von 0,05 bis 0,25 liegt.

7. Celluloseether gemäß einem oder mehreren der Ansprüche 1 bis 6, **dadurch gekennzeichnet, dass** der MS(Alkin) im Bereich von 0,05 bis 0,25 liegt.

8. Celluloseether gemäß einem oder mehreren der Ansprüche 1 bis 7, **dadurch gekennzeichnet, dass** sie einen durchschnittlichen Polymersationsgrad DPn, bestimmt nach der Cuoxam-Methode, von 50 bis 4000, bevorzugt von 1000 bis 2500, besonders bevorzugt von 700 bis 1500, aufweisen.

9. Verfahren zur Herstellung eines Celluloseethers gemäß einem oder mehreren der Ansprüche 1 bis 8, **dadurch gekennzeichnet, dass** Cellulose oder ein Celluloseether co-verethert wird mit (i) einer Hydroxyalkyl-Komponente,und (ii) einer Alkin-Komponente.

10. Verfahren gemäß Anspruch 9, **dadurch gekennzeichnet, dass** die Hydroxyalkyl-Komponente Ethylenoxid oder Propylenoxid ist.

11. Verfahren gemäß Anspruch 9, **dadurch gekennzeichnet, dass** die Alkin-Komponente Propargylbromid ist.

12. Verfahren gemäß Anspruch 9, **dadurch gekennzeichnet, dass** die Azid-Komponente Glycidylazid ist.

13. Verwendung des Celluloseethers gemäß einem oder mehreren der Ansprüche 1 bis 8 als wasserfester Klebstoff, **dadurch gekennzeichnet, dass** er mit Wasser vermischt oder, wenn der Celluloseether keine Alkingruppen aufweist, zusätzlich mit einem nicht-ionischen Celluloseether vermischt wird, der ω-Alkingruppen und Hydroxyalkylgruppen enthält, die jeweils über Etherbindungen an die Cellulose gebunden sind, die Mischung auf mindestens eine der zu verklebenden Oberflächen aufgetragen und dann mit einem Kupfer(I)- oder einem Ruthenium-Katalysator in Kontakt gebracht wird.

14. Verwendung gemäß Anspruch 13, **dadurch gekennzeichnet, dass** die zu verklebenden Oberflächen aus Holz, Papier, Karton oder anderem cellulosehaltigen Material bestehen.

## Claims

1. Nonionic, water-soluble cellulose ethers with hydroxyalkyl groups and ω-alkynyl groups, each joined to the cellulose via an ether bond, the degree of molar substitution MS(Alkyne) being in the range from 0.001 to 0.30.

2. Cellulose ethers according to Claim 1, **characterized in that** they further contain azido groups, preferably 3-azido-2-hydroxypropyl groups, which are joined to the cellulose by an ether bond, the MS(AHP) being in the range from 0.001 to 0.3.

3. Cellulose ethers according to Claim 1 or 2, **characterized in that** they additionally contain alkyl groups, joined to the cellulose by an ether bond, the alkyl groups being preferably straight-chain (C1 - C6)alkyl groups, more preferably methyl or ethyl groups.

4. Cellulose ethers according to one or more of Claims 1 to 3, **characterized in that** the w-alkynyl groups have 3 to 6 carbon atoms, propargyl groups being particularly preferred.

5. Cellulose ethers according to one or more of Claims 1 to 4, **characterized in that** the hydroxyalkyl groups are 2-hydroxyethyl or 2-hydroxypropyl groups.

6. Cellulose ethers according to one or more of Claims 2 to 5, **characterized in that** the MS(AHP) is in the range from 0.05 to 0.25.

7. Cellulose ethers according to one or more of Claims 1 to 6, **characterized in that** the MS(alkyne) is in the range from 0.05 to 0.25.

8. Cellulose ethers according to one or more of Claims 1 to 7, **characterized in that** they have an average degree of polymerization DPn, determined by the Cuoxam method, of 50 to 4000, preferably of 1000 to 2500, more preferably of 700 to 1500.

9. Process for preparing a cellulose ether according to one or more of Claims 1 to 8, **characterized in that** cellulose or a cellulose ether is coetherified with (i) a hydroxyalkyl component, and (ii) an alkyne component.

10. Process as claimed in claim 9, **characterized in that** the hydroxyalkyl component is ethylene oxide or propylene oxide.

11. Process as claimed in claim 9, **characterized in that** the alkyne component is propargyl bromide.

12. Process as claimed in claim 9, **characterized in that** the azide component is glycidyl azide.

13. Use of the cellulose ether according to one or more of Claims 1 to 8 as water-resistant adhesive, **characterized in that** it is mixed with water or, if the cellulose ether contains no alkyne groups, is mixed additionally with a non-ionic cellulose ether containing ω-alkyne groups and hydroxyalkyl groups, each bonded to the cellulose by ether bonds, and the mixture is applied to at least one of the surfaces to be bonded and is then contacted with a copper(I) catalyst or a ruthenium catalyst.

14. Use according to Claim 13, **characterized in that** the surfaces to be bonded consist of wood, paper, cardboard or other cellulosic material.

## Revendications

1. Ethers de cellulose non ioniques, solubles dans l'eau, comportant des groupes hydroxyalkyle et des groupes ω-alcinyle, qui sont liés respectivement par une liaison éther avec la cellulose, dans lesquels le degré de substitution molaire MS(alcine) se situe dans la plage de 0,001 à 0,30.

2. Ethers de cellulose selon la revendication 1, **caractérisés en ce qu'**ils présentent de plus des groupes azido, de préférence des groupes 3-azido-2-hydroxypropyle, qui sont liés par une liaison éther avec la cellulose, dans lesquels le MS(AHP) se situe dans la plage de 0,001 à 0,3.

3. Ethers de cellulose selon la revendication 1 ou 2, **caractérisés en ce qu'**ils présentent de plus des groupes alkyle qui sont liés par une liaison éther avec la cellulose, dans lesquels les groupes alkyle sont de préférence des groupes alkyle (en C1 à C6) à chaîne linéaire, de manière particulièrement préférée, des groupes méthyle ou éthyle.

4. Ethers de cellulose selon une ou plusieurs des revendications 1 à 3, **caractérisés en ce que** les groupes ω-alcinyle présentent 3 à 6 atomes de carbone, dans lesquels des groupes propargyle sont particulièrement préférés.

5. Ethers de cellulose selon une ou plusieurs des revendications 1 à 4, **caractérisés en ce que** les groupes hydroxyalkyle sont des groupes 2-hydroxyéthyle ou 2-hydroxypropyle.

6. Ethers de cellulose selon une ou plusieurs des revendications 2 à 5, **caractérisés en ce que** le MS(AHP) se situe dans la plage de 0,05 à 0,25.

7. Ethers de cellulose selon une ou plusieurs des revendications 1 à 6, **caractérisés en ce que** le MS(alcine) se situe dans la plage de 0,05 à 0,25.

8. Ethers de cellulose selon une ou plusieurs des revendications 1 à 7, **caractérisés en ce qu'**ils présentent un degré de polymérisation moyen DPn, déterminé selon la méthode Cuoxam, de 50 à 4000, de préférence de 1000 à 2500, de manière particulièrement préférée de 700 à 1500.

9. Procédé de production d'un éther de cellulose selon une ou plusieurs des revendications 1 à 8, **caractérisé en ce que** de la cellulose ou un éther de cellulose est co-éthérifié(e) avec (i) un composant hydroxyalkyle, et (ii) un composant alcine.

10. Procédé selon la revendication 9, **caractérisé en ce que** le composant hydroxyalkyle est un oxyde d'éthylène ou un oxyde de propylène.

11. Procédé selon la revendication 9, **caractérisé en ce que** le composant alcine est un bromure de propargyle.

12. Procédé selon la revendication 9, **caractérisé en ce que** le composant azide est un azide de glycidyle.

13. Utilisation de l'éther de cellulose selon une ou plusieurs des revendications 1 à 8 en tant qu'adhésif insoluble dans l'eau, **caractérisé en ce qu'**il est mélangé avec de l'eau, lorsque l'éther de cellulose ne présente pas de groupes alcine, de plus est mélangé avec un éther de cellulose non ionique qui contient des groupes ω-alcine et des groupes hydroxyalkyle qui sont liés respectivement à la cellulose par des liaisons éther, le mélange est appliqué sur au moins l'une des surfaces à coller et ensuite est mis en contact avec un catalyseur au cuivre (I) ou au ruthénium.

14. Utilisation selon la revendication 13, **caractérisée en ce que** les surfaces à coller consistent en du bois, du papier, du carton ou un autre matériau contenant de la cellulose.
